(19) Europäisches Patentamt
European Patent Office
Office européen des brevets

(11) **EP 3 867 510 B1**

(12) **EUROPEAN PATENT SPECIFICATION**

(45) Date of publication and mention of the grant of the patent:
**20.11.2024  Bulletin 2024/47**

(21) Application number: **19787251.8**

(22) Date of filing: **15.10.2019**

(51) International Patent Classification (IPC):
*F02D 35/02* $^{(2006.01)}$    *F02D 41/00* $^{(2006.01)}$
*F02D 41/04* $^{(2006.01)}$    *F02D 41/14* $^{(2006.01)}$
*F02D 41/22* $^{(2006.01)}$    *G01L 23/22* $^{(2006.01)}$
*G01M 15/11* $^{(2006.01)}$

(52) Cooperative Patent Classification (CPC):
**F02D 41/22; F02D 35/027; F02D 35/028; F02D 41/0097; F02D 41/045; F02D 41/1497; F02D 41/1498; G01M 15/11;** F02D 2200/1012; Y02T 10/40

(86) International application number:
**PCT/EP2019/077894**

(87) International publication number:
**WO 2020/078956 (23.04.2020 Gazette 2020/17)**

(54) **GLOW IGNITION DETECTION IN AN INTERNAL COMBUSTION ENGINE**

VORZÜNDUNGSERKENNUNG IN EINER BRENNKRAFTMASCHINE

DÉTECTION DE PRÉ-ALLUMAGE DANS UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2018  GB 201817031**

(43) Date of publication of application:
**25.08.2021  Bulletin 2021/34**

(73) Proprietor: **PHINIA Delphi Luxembourg SARL 4367 Belvaux (LU)**

(72) Inventors:
• **RANDAZZO, Stephane**
  **57290 Fameck (FR)**
• **DA GRACA, Mathieu**
  **54190 Villerupt (FR)**
• **MONNARD, Julien**
  **57310 Guenange (FR)**

(74) Representative: **Office Freylinger P.O. Box 48 8001 Strassen (LU)**

(56) References cited:
DE-A1- 3 615 547      DE-B3- 102009 008 247
JP-A- 2009 275 663    JP-A- H0 378 550
US-A- 5 086 741       US-A1- 2010 294 027

## Description

### Technical field

The present invention generally relates to combustion management in internal combustion engines. The invention more particularly relates to a method for monitoring the occurrence of glow ignition in a spark-ignition, internal combustion engine.

### Background of the Invention

In multi-cylinder spark-ignition internal combustion engines, studies reveal that undesired combustion modes create explosion waves or over-pressures that can ultimately cause irreversible destruction of the engine parts. In modern automobile vehicles, these undesired combustions modes are usually detected by processing signals from a vibration sensor located in the lower engine block called knock sensor. The knock sensor is configured to measure the engine block vibrations during a specific crank angular window, and to detect abnormal ignition events. Nevertheless, knock sensor detection is limited to combustions that produce noticeable vibration patterns in a predefined timing range.

One particular abnormal combustion type called glow-ignition occurs when the combustion is initiated in a cylinder by a hot spot or an incandescent particle before the normal spark. The combustion after a glow-ignition event has a normal behavior in the sense that the propagation is done with a flame front like in a normal combustion, but glow-ignition generates undesired high maximum pressure in the cylinder. Occurrences of this type of abnormal combustions do not generate pressure peaks that may be sensed using conventional knock sensors.

As an alternative to knock sensor detection, it is known to process signals from sensors already installed in the engine to detect abnormal combustion modes or misfires, such as for example signals from a crank position sensor. As it is known, the crank position sensor is designed to cooperate with a target wheel that is rotationally integral with the crankshaft. The target wheel has a peripheral pattern of teeth and slots and the sensor is arranged to detect the passage of the teeth, generating a corresponding sensor signal with a pulse train. The signal generated by the crank position sensor permits determining the instantaneous position and rotational speed of the crankshaft.

US 9,097,126, for example, uses the crank sensor signal for identifying stochastic pre-ignition. The method described therein comprises a pre-ignition detection module that determines whether a pre-ignition event has occurred based on so-called "periods", where a period is the duration between two consecutive timestamps (corresponding to a pulse generated by a tooth of the target wheel). More specifically, the method compares differences between time periods (deltas).

Another example of a similar system is shown in DE 36 15 547.

### Object of the invention

An object of the present invention is to provide an improved method for detecting glow-ignition events in an internal combustion engine.

### General Description of the Invention

According to the present invention, a method for monitoring glow ignition in an internal combustion engine comprises among others the following steps:

- monitoring a crankshaft speed of the engine over a detection window corresponding to a crankshaft deceleration phase related to a compression stroke in a given engine cylinder;
- determining a glow indicator based on a crankshaft speed deceleration gradient between two points defined by their respective crankshaft speed and crank angle, wherein the first point (Pinit) is defined by a predetermined crankshaft angle and corresponding speed during said deceleration, and the second point (Pmin) is a point of lowest speed reached during said deceleration;
- comparing the glow indicator to a predetermined threshold in order to detect presence or absence of glow ignition.

In the context of the invention, the term glow-ignition is used in its conventional meaning and thus designates, for a spark-ignition engine, an ignition occurring early in the combustion cycle, typically during the compression stroke. Glow-ignition is generally generated by a hot spot or an incandescent particle in the cylinder.

The invention is made on the insight that glow ignition, while not causing vibrations, provokes a significant early rise of the cylinder pressure. The high pressure of a glow-ignition is generated during the compression stroke of the respective cylinder. The pressure change provoked by the glow-ignition goes against the movement of the piston towards the firing top dead center, and further increases the ongoing deceleration of the piston in the cylinder.

That is, early rise of pressure due to glow-ignition slows down the piston before the firing top dead center noticeably more than for a normal combustion. As a result, when glow ignition is present, the crankshaft speed drops, towards the end of the compression phase, to lower values and at a steeper rate, as compared to a normal combustion. The method of the invention proposes monitoring, for an engine cylinder, the deceleration of the crankshaft occurring in relation to the compression in the respective cylinder, and determining a glow indicator based on a deceleration gradient of the crankshaft that characterizes the steepness of the deceleration, which will be affected by the presence of glow ignition.

It will be appreciated that in the present method, the deceleration gradient is determined between the first point defined by a predetermined angular position and the second point that is the lowest speed point reached during the deceleration. The first point is defined by calibration, typically to be in a part of the deceleration phase that remains substantially stable for both normal and abnormal combustions. It has however been observed that the position of the second point depends on the occurrence of glow ignition, in which case the engine speed drops to lower values at an earlier crank position.

It may further be noted that in the present method the deceleration gradient is preferably computed over a significant portion of the deceleration, much larger than the crank angle separating two teeth of a target wheel. In other words, the deceleration gradient is determined over a crank angle range corresponding to a plurality of teeth of the target wheel, which is more reliable than a gradient that would be computed between two consecutive teeth, more likely to be affected by artefacts.

The point of lowest speed is preferably the point of minimum crankshaft speed reached in the detection window, but may alternatively lie within a predetermined deviation from the minimum crankshaft speed.

The predetermined crankshaft angle of the first point may be between -60° and -18° before the firing top dead center, preferably between -48 and -24°.

The detection window is calibrated to encompass the phase of interest of the engine cycle, and should at least extend from the angular position of the first point to an angular position including the minimum speed of a normal combustion. In practice, the detection window may, e.g., range from -90° to +30° of crank angle. The point of minimum speed is thus determined in the window as the point of lowest speed.

The crankshaft position may be conventionally monitored by means of a crank position sensor arranged to sense a target wheel comprising a predetermined tooth/slot pattern and rotationally coupled with the crankshaft.

As regards the predetermined deceleration threshold, it may be defined in any appropriate manner. In particular, it may be based on earlier threshold values.

In embodiments, the deceleration threshold $Thrsh_{decel}$ may be calculated using the formula

$$Thrsh_{decel} = Avg_{decel} + Offset_{decel}$$

wherein $Avg_{decel}$ is the average of previous deceleration gradient values; and $Offset_{decel}$ is a predetermined offset characterizing the limit between a normal combustion and a glow-ignition combustion mode.

In particular, the average of the deceleration gradient $Avg_{decel}$ may be calculated for one or more previous values of deceleration gradient for all engine cylinders. Furthermore, $Offset_{decel}$ may be a fraction of $Avg_{decel}$, preferably the half of the average of the deceleration gradient.

**Brief Description of the Drawings**

Further details and advantages of the present invention will be apparent from the following detailed description of not limiting embodiments with reference to the attached drawings, wherein:

Fig. 1    is a sketch of a crank position sensor arranged in an internal combustion engine;

Fig. 2    is a graph representing cylinder pressure vs. crank angle for 4 combustion cycles;

Fig.3    is a graph showing the engine speed vs. crank angle for the same combustion cycles as in Fig.2;

Fig. 4    is a graph showing the engine speed vs. crank angle for a combustion cycle; and

Fig. 5    is a graph of the deceleration glow indicator vs. time.

**Description of Preferred Embodiments**

As it is known in the art, in a spark-ignition internal combustion engine such as a gasoline operated engine, a number of sensors are provided to monitor engine parameters, including a crank position sensor for monitoring the angular position of the crankshaft. The crank position sensor is typically arranged to cooperate with a toothed wheel, or target wheel, that is rotationally integral with the crankshaft, generating a sensor signal with a pulse train as the respective teeth pass in front of the sensor. The crankshaft rotational speed is determined base on this signal. The crankshaft speed is of course also referred to as engine speed, expressed in RPM, and both terms may be used as equivalents herein.

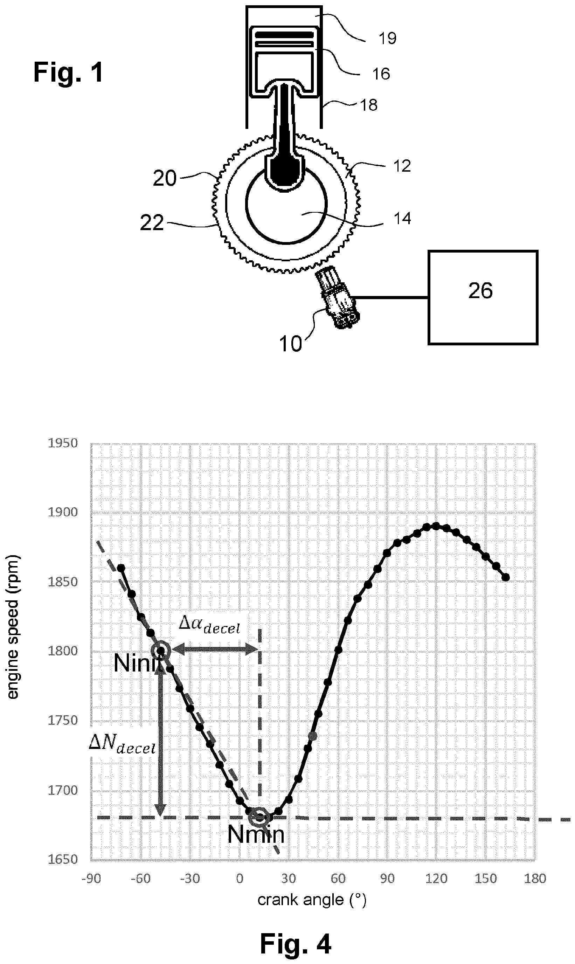

Referring to Fig.1, a crank position sensor 10 is arranged to cooperate with a target wheel 12 secured in rotation to a crankshaft 14 of an engine. The crankshaft 14 is connected to a piston 16 mounted in an engine cylinder 18, defining therewith a combustion chamber 19. Although Fig. 1 only shows one piston 16 and one cylinder 18, the engine generally includes 3, 4 or up to 8 cylinders.

Conventionally, the target wheel 12 may be an N-toothed wheel 12 comprising a plurality of teeth 20 spaced by gaps. Here, the target wheel 12 comprises 58 teeth 20 that are equally spaced by gaps, as well as a larger gap 22 where 2 equally spaced teeth are missing. Hence, two consecutive teeth are separated by a rotational distance of approximately 6° (360°/60=6°), except around the gap 22. The gap 22 serves as a synchronizing reference

The crank position sensor 10 monitors passing of the teeth 20 of the rotating target wheel 12. The sensor 10 may for example comprise a Hall Effect sensor or an inductive sensor. The sensor shown in Fig. 1 creates a crank position signal comprising pulses generated each time a tooth of the target wheel 12 passes in front thereof.

In other embodiments any suitable combination of target wheel and sensor unit may be used. For example, the target wheel may alternatively be a wheel with visual signs associated with an optical sensor.

The crank position sensor 10 is connected to a control module 26, which receives the signal generated by the sensor 10 and determines the crankshaft position based on the pulse train. The control module 26 is configured to generate a timestamp for each pulse, and subsequently determines the time period between two teeth/pulses, and calculates a rotational speed of the crankshaft based on the period and the distance between the two teeth. The crankshaft speed is thus determined for each predetermined angular position defined by a target wheel tooth.

As used herein, the term normal combustion designates combustion that is initiated by a spark of the spark plug commanded by an engine control unit (ECU). Normal combustion creates normal conditions leading to combustion of the air/fuel mixture and providing torque, without occurrence of abnormal phenomena such as knock, pre-ignition or glow-ignition. The terms glow-ignition and pre-ignition refer to events initiating an abnormal combustion as opposed to combustion in normal conditions.

The present method for identifying glow-ignition in an internal combustion engine is based on the determination of a decelaration gradient of the crankshaft during the deceleration phase thereof prior to firing in a given engine cylinder. The deceleration gradient is however determined for a specific part of this deceleration phase. Indeed, it has been observed that the presence of glow ignition substantially affects the crankshaft speed.

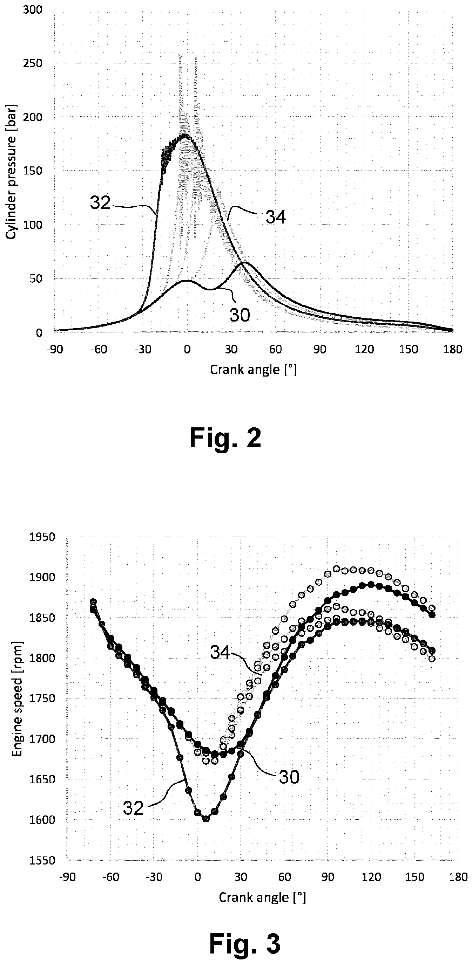

Let us turn to Fig. 2, which shows a graph of the in-cylinder pressure vs. crank angle (CA) in an engine cylinder for a normal combustion cycle represented by line 30, a combustion cycle where glow ignition is present represented by line 32 and two combustion cycles where pre-ignition is present, indicated 34. The graph in Fig.3 represents the crankshaft speed vs. CA for the same combustion cycles. The pressure graph reflects what is truly happening in the combustion chamber. One can indeed observe that glow ignition and pre-ignition are characterized by significant pressure peaks, however at different times. Whereas glow ignition occurs in the late compression phase, before the firing top dead center, pre-ignition occurs later, rather after top dead center.

Looking at the crankshaft rotational speed, one can notice that it describes a sine-wave like curve. Indeed, the crankshaft speed varies in correlation with the piston strokes in the various cylinders. It can be seen that the crankshaft speed decreases before the firing TDC (due to compression stroke) and increases thereafter (due to combustion/expansion). For a 4 cylinder engine, the crankshaft speed will describe 4 sine wave periods over a complete combustion cycle (720°).

In Fig.3, it can be further noticed that when glow ignition is present, the crankshaft speed drops, towards the end of the compression phase, to lower values and at a steeper rate, as compared to a normal combustion. The minimum of the curve moves to the left, i.e. to earlier CA values. As can also be seen, pre-ignition events rather affect the engine speed after f-TDC. Hence, the analysis of the engine speed in this region of the engine speed curve permits identifying the occurrence of glow iginition.

An embodiment of the present method for identifying glow-ignition will now be explained in detail. In a first step, the crankshaft speed is monitored. This is typically done based on the signal of the crank position sensor 10. As it is known, the engine ECU or a module thereof, is conventionally configured to analyze the sensor signal in order to attribute a timestamp to each crank angle position. An instantaneous engine speed is calculated for each crank position (corresponding to each tooth) based on the time period between two consecutive pulses/teeth. In a conventional engine, the engine speed is constantly monitored by the crank sensor, whereby no additional sensor is required for implementing the present method.

As it is known in the art, the raw sensor data are advantageously processed in the ECU to reduce the influence of measurement artefacts due to design imperfections, such as e.g. a backlash in the sensor wheel center position, or interferences caused by vibrations. The aim of such treatment is to obtain a rather smooth sine-line speed variation. Processing may include any suitable signal processing method known in the art to smoothen the resulting curve such as for example gap interpolation combined with dual stage Gaussian filter. This is only an example and those skilled in the art may apply any appropriate signal preparation.

The ECU maintains map with the crankshaft angular position and corresponding rotational speed over one or more engine cycle, for access by all modules and functions. This map thus stores points defined by the couple (CA; RPM).

For the purpose of glow detection, engine speed data, together with corresponding angular positions, are received at a glow detection module (also generally part of the ECU). At the level of one cylinder, the glow detection module will consider the speed and angular position data in a detection window corresponding to the crankshaft deceleration phase related to a compression stroke of this cylinder. Turning to Fig.4, the engine speed is plotted vs. crank angle. Each dot represents a point (CA; RPM), as read from the engine speed map. As is customary in the art, the crank angle value 0° corresponds to the firing Top Dead Center (f-TDC) of the monitored cylinder. One will recognize the sine wave described by the engine speed, with a minimum near the f-TDC. The engine speed decrease occurs mostly on the left of f-TDC, i.e. during compression stroke (CA<0°). After passing through the minimum, the engine speed increases again due to the combustion in the respective cylinder.

The glow ignition indicator used in the present method is a deceleration gradient computed over a crank angle range spanning over several speed points, thus over several teeth of the target wheel. The deceleration gradient is thus between two points:

- a first point noted $P_{init}$ that is defined by its crank angle $\alpha_{init}$ and speed $N_{init}$; and

- A second point $P_{min}$ that is defined by its crank angle $\alpha_{min}$ and speed $N_{min}$.

$P_{min}$ corresponds to the point with minimum speed reached during the deceleration. It is easily determined by comparison from the values stored in the engine speed table.

$P_{init}$ is a predefined point that is typically determined by calibration. It is set so that there is a minimum crank angle difference between $P_{init}$ and $P_{min}$. $P_{init}$ is preferably defined as corresponding to a predefined crank angle (e.g. tooth number N of the target wheel). $P_{init}$ is selected to be on a part of the deceleration curve that is not affected by the occurrence of abnormal combustion.

Once the values of $P_{init}$ and $P_{min}$ have been determined from the PRM-CA map within the detection window of interest, the deceleration gradient may be calculated as:

$$\frac{\Delta N_{decel}}{\Delta \alpha_{decel}} = \frac{N_{min} - N_{init}}{\alpha_{min} - \alpha_{init}}$$

As discussed above, in the presence of glow ignition, Pmin will move to the left and to lower values, causing $\Delta N_{decel}$ to increase and $\Delta \alpha_{decel}$ to decrease. As a result, the deceleration gradient $\frac{\Delta N_{decel}}{\Delta \alpha_{decel}}$ increases.

It may be observed that the deceleration gradient is determined on the basis of a variable tooth of the target wheel, since in case of glow ignition the minimum speed ($P_{init}$) will occur earlier than for a normal combustion (and thus for a different tooth). By contrast the initial point $P_{init}$ corresponds to a fixed tooth.

The so-determined glow indicator is compared to a detection threshold. When the glow indicator exceeds the detection threshold, glow ignition is considered to have occurred in the corresponding combustion cycle. Otherwise, the combustion is considered as normal.

In particular, the detection threshold $Thrsh_{decel}$ may be determined as:

$$Thrsh_{decel} = Avg_{decel} + Offset_{decel}$$

where $Avg_{decel}$ is an average deceleration gradient; and

$Offset_{decel}$ is a predetermined offset characterizing the limit between a normal and an abnormal combustion mode defined in a speed / load map.

$Avg_{decel}$ is an average of the last computed deceleration gradient (last cycle) for all engine cylinders. To reduce the weight of abnormal combustions in the calculation of the average, the deceleration gradients are weighted by multiplying deceleration gradient of normal combustion modes by 1, and by multiplying deceleration gradients of abnormal combustion modes by an adjustable weight value inferior to 1.

The predetermined offset may have any suitable value that, like for example half of the average deceleration.

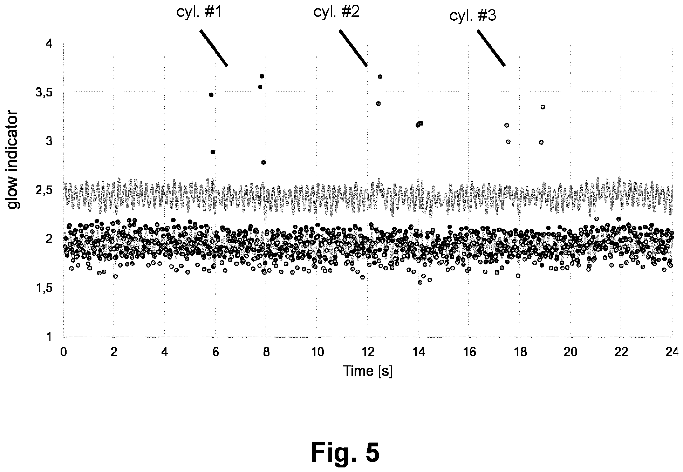

The graph of Fig.5 shows the evolution of the deceleration gradient over time for an engine with three cylinders. The points in the lower region of the graph -oscillating about the value 2.0, correspond to normal combustions. The continuous line oscillating about the value 2.5 represents the detection threshold $Thrsh_{decel}$. Finally points representing combustions where combustion has occurred are indicated for each cylinder (cyl. #1, cyl. #2 and cyl. #3).

As can be seen, the glow indicator proposed used in the present method is a good criterion to detect glow ignition in an engine.

## Claims

1. A method for monitoring glow ignition in an internal combustion engine, said method comprising:

   monitoring a crankshaft speed of said engine over a detection window corresponding to a crankshaft deceleration phase related to a compression stroke in a given engine cylinder;
   determining a first point (Pinit) defined by a predetermined crankshaft angle ($\alpha_{init}$) and corresponding speed ($N_{init}$) during said deceleration, the angle being in the detection window;
   determining a second point (Pmin) defined by a crankshaft angle and corresponding speed ($N_{min}$) when the lowest speed ($\alpha_{min}$) is reached within said detection window;
   determining a glow indicator based on a crankshaft speed deceleration gradient between the first and the second points;
   comparing said glow indicator to a predetermined threshold in order to detect the presence of glow ignition when the glow indicator exceeds the detection threshold and the absence of glow ignition when the glow indicator does not exceed the detection threshold,
   wherein the deceleration gradient is calculated using the formula

$$\frac{\Delta N_{decel}}{\Delta \alpha_{decel}} = \frac{N_{min} - N_{init}}{\alpha_{min} - \alpha_{init}}$$

   wherein $N_{init}$ and $\alpha_{init}$ are the engine speed and crank angle defining said first point; and $N_{min}$ and $\alpha_{min}$ are the engine speed and crank angle defining said second point.

2. Method according to claim 1, wherein the predetermined crankshaft angle of said first point is between -60° and -18° before the firing top dead center, preferably between -48 and -24°.

3. The method according to any one of the preceding claims, wherein said detection window ranges from -90° to +30° of crank angle.

4. The method according to any one of the preceding claims, wherein the crankshaft position is monitored by means of a crank position sensor arranged to sense a target wheel comprising a predetermined tooth/slot pattern and rotationally coupled with the crankshaft.

5. Method according to any one of the preceding claims, wherein the deceleration threshold $Thrsh_{decel}$ is calculated using the formula

$$Thrsh_{decel} = Avg_{decel} + Offset_{decel}$$

   wherein $Avg_{decel}$ is the average of previous deceleration gradient values; and
   $Offset_{decel}$ is a predetermined offset characterizing the limit between a normal combustion and a glow-ignition combustion mode.

**6.** Method according to claim 5, wherein the average of the deceleration gradient $Avg_{decel}$ is calculated for one or more previous values of deceleration gradient for all engine cylinders.

**7.** Method according to any one of claims 5 or 6, wherein $Offset_{decel}$ is a fraction of $Avg_{decel}$, preferably the half of the average of the deceleration gradient.

**Patentansprüche**

**1.** Verfahren zum Überwachen der Glühzündung in einem Verbrennungsmotor, wobei das Verfahren umfasst:

Überwachen einer Kurbelwellendrehzahl des Motors über ein Erfassungsfenster, das einer Kurbelwellenverzögerungsphase in Bezug auf einen Kompressionshub in einem gegebenen Motorzylinder entspricht;
Bestimmen eines ersten Punktes (Pinit), der durch einen vorbestimmten Kurbelwellenwinkel ($\alpha_{init}$) und die entsprechende Drehzahl ($N_{init}$) während der genannten Verzögerung definiert ist, wobei sich der Winkel in dem Erfassungsfenster befindet;
Bestimmen eines zweiten Punktes (Pmin), der durch einen Kurbelwellenwinkel und die entsprechende Drehzahl ($N_{min}$) definiert ist, wenn die niedrigste Drehzahl ($N_{min}$) innerhalb des Erfassungsfensters erreicht ist;
Bestimmen eines Glühindikators auf der Grundlage eines Kurbelwellendrehzahl-Verzögerungsgradienten zwischen dem ersten und dem zweiten Punkt;
Vergleichen des Glühindikators mit einem vorbestimmten Schwellenwert, um das Vorhandensein einer Glühzündung zu erkennen, wenn der Glühindikator den Erfassungsschwellenwert überschreitet, und das Fehlen einer Glühzündung zu erkennen, wenn der Glühindikator den Erfassungsschwellenwert nicht überschreitet, wobei der Verzögerungsgradient unter Verwendung der folgenden Formel berechnet wird:

$$\frac{\Delta N_{decel}}{\Delta \alpha_{decel}} = \frac{N_{min} - N_{init}}{\alpha_{min} - \alpha_{init}}$$

wobei $N_{init}$ und $\alpha_{init}$ die Motordrehzahl und der Kurbelwinkel sind, die den ersten Punkt definieren; und $N_{min}$ und $\alpha_{min}$ die Motordrehzahl und der Kurbelwinkel sind, die den zweiten Punkt definieren.

**2.** Verfahren nach Anspruch 1, wobei der vorbestimmte Kurbelwellenwinkel des ersten Punktes zwischen -60° und -18° vor dem oberen Zündtotpunkt liegt, vorzugsweise zwischen -48 und -24°.

**3.** Verfahren nach einem der vorhergehenden Ansprüche, wobei das Erfassungsfenster im Bereich von -90° bis +30° des Kurbelwinkels liegt.

**4.** Verfahren nach einem der vorhergehenden Ansprüche, wobei die Kurbelwellenposition mittels eines Kurbelpositionssensors überwacht wird, der so angeordnet ist, dass er ein Messzahnrad erfasst, das ein vorbestimmtes Zahn-/Schlitzmuster aufweist und drehbar mit der Kurbelwelle gekoppelt ist.

**5.** Verfahren nach einem der vorhergehenden Ansprüche, wobei die Verzögerungsschwelle $Thrsh_{decel}$ unter Verwendung der folgenden Formel berechnet wird:

$$Thrsh_{decel} = Avg_{decel} + Offset_{decel}$$

wobei $Avg_{decel}$ der Durchschnitt der vorherigen Verzögerungsgradientenwerte ist; und
$Offset_{decel}$ ein vorbestimmter Offset ist, der die Grenze zwischen einem normalen Verbrennungsmodus und einem Verbrennungsmodus mit Glühzündung kennzeichnet.

**6.** Verfahren nach Anspruch 5, wobei der Durchschnitt des Verzögerungsgradienten $Avg_{decel}$ für einen oder mehrere vorherige Werte des Verzögerungsgradienten für alle Motorzylinder berechnet wird.

**7.** Verfahren nach einem der Ansprüche 5 oder 6, wobei $Offset_{decel}$ ein Bruchteil von $Avg_{decel}$ ist, vorzugsweise die Hälfte des Durchschnitts des Verzögerungsgradienten.

**Revendications**

1. Procédé pour surveiller le pré-allumage dans un moteur à combustion interne, ledit procédé comprenant :

   la surveillance d'une vitesse de vilebrequin dudit moteur sur une fenêtre de détection correspondant à une phase de décélération de vilebrequin rapportée à une course de compression dans un cylindre de moteur donné ;
   la détermination d'un premier point (Pinit) défini par un angle de vilebrequin prédéterminé ($\alpha_{init}$) et une vitesse correspondante prédéterminée ($N_{init}$) pendant ladite décélération, l'angle étant dans la fenêtre de détection ;
   la détermination d'un second point (Pmin) défini par un angle de vilebrequin et une vitesse correspondante ($N_{min}$) lorsque la vitesse la plus faible ($N_{min}$) est atteinte à l'intérieur de ladite fenêtre de détection ;
   la détermination d'un indicateur d'allumage sur la base d'un gradient de décélération de vitesse de vilebrequin entre les premier et second points ;
   la comparaison dudit indicateur d'allumage avec un seuil prédéterminé afin de détecter la présence d'un pré-allumage lorsque l'indicateur d'allumage excède le seuil de détection et l'absence d'un pré-allumage lorsque l'indicateur d'allumage n'excède pas le seuil de détection,
   dans lequel le gradient de décélération est calculé en utilisant la formule :

$$\frac{\Delta N_{decel}}{\Delta \alpha_{decel}} = \frac{N_{min} - N_{init}}{\alpha_{min} - \alpha_{init}}$$

   dans laquelle $N_{init}$ et $\alpha_{init}$ sont la vitesse de moteur et l'angle de vilebrequin définissant ledit premier point ; et $N_{min}$ et $\alpha_{min}$ sont la vitesse de moteur et l'angle de vilebrequin définissant ledit second point.

2. Procédé selon la revendication 1, dans lequel l'angle de vilebrequin prédéterminé dudit premier point est entre -60° et -18° avant le point mort haut d'allumage, de préférence entre -48° et -24°.

3. Procédé selon l'une quelconque des revendications précédentes, dans lequel ladite fenêtre de détection s'inscrit dans une plage qui va de -90° à +30° d'angle de vilebrequin.

4. Procédé selon l'une quelconque des revendications précédentes, dans lequel la position de vilebrequin est surveillée au moyen d'un capteur de position de vilebrequin agencé pour détecter une roue cible comprenant un motif de dent/fente prédéterminé et couplée à rotation au vilebrequin.

5. Procédé selon l'une quelconque des revendications précédentes, dans lequel le seuil de décélération *Thrsh*$_{decel}$ est calculé en utilisant la formule :

$$Thrsh_{decel} = Avg_{decel} + Offset_{decel}$$

   dans laquelle *Avg*$_{decel}$ est la moyenne de valeurs de gradient de décélération précédentes ; et
   *Offset*$_{decel}$ est un décalage prédéterminé caractérisant la limite entre une combustion normale et un mode de combustion de pré-allumage.

6. Procédé selon la revendication 5, dans lequel la moyenne du gradient de décélération *Avg*$_{decel}$ est calculée pour une ou plusieurs valeurs précédentes de gradient de décélération pour tous les cylindres de moteur.

7. Procédé selon l'une quelconque des revendications 5 ou 6, dans lequel *Offset*$_{decel}$ est une fraction de *Avg*$_{decel}$, de préférence la moitié de la moyenne du gradient de décélération.

**Fig. 1**

**Fig. 4**

**Fig. 2**

**Fig. 3**

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9097126 B

- DE 3615547